# EUROPÄISCHE PATENTSCHRIFT

(11) **EP 2 602 485 B1**
(45) Veröffentlichungstag und Bekanntmachung des Hinweises auf die Patenterteilung: **08.11.2017**
(21) Anmeldenummer: 12005832.6
(22) Anmeldetag: 11.08.2012
(51) Int. Cl.: F04C 14/18, F01M 1/16

(54) **Einstellvorrichtung, insbesondere für Kraftfahrzeuge**
Adjustment device, in particular for motor vehicles
Dispositif de réglage, notamment pour véhicules automobiles

(30) Priorität: 05.12.2011 DE 102011120082
(43) Veröffentlichungstag der Anmeldung: 12.06.2013
(73) Patentinhaber: MAN Truck & Bus AG, 80995 München (DE)
(72) Erfinder: Späth, Moritz, 91080 Uttenreuth (DE)
(74) Vertreter: Liebl, Thomas

(56) Entgegenhaltungen:
- EP-A1- 2 090 758
- WO-A1-81/00881
- WO-A1-2005/068838
- DE-A1- 4 224 973
- JP-A- 62 248 812

## Beschreibung

Die Erfindung betrifft eine Einstellvorrichtung, insbesondere für ein Kraftfahrzeug, mit zumindest einer Einstelleinheit zur Regelung der Förderleistung einer Pumpe die ein Medium über eine Arbeitsleitung zu einem Arbeitsort fördert, wobei die Einstelleinheit einen Stellzylinder umfasst, der über eine Steuerleitung mit dem Arbeitsort verbunden ist und den dort vorliegenden Arbeitsdruck des Mediums als auf den Stellzylinder wirkende Zustellkraft bei der Zustellung des Stellzylinders berücksichtigt. Damit wird der Arbeitsdruck zur Zustellung des Zustellzylinders verwendet bzw. wirkt hierzu ein.

Aus dem Stand der Technik geht aus der Offenlegungsschrift DE 10 2004 039 713 A1 eine Einstellvorrichtung hervor, die mit zumindest einer Einstelleinheit einen Druck eines Druckmediums abhängig von zumindest einem Parameter verwendet um auf die Förderleistung der Pumpeneinheit einzuwirken. Hierzu werden zwei Drosselstellen verwendet, die in Reihe zueinander angeordnet sind. Bei kaltem Motor und kaltem Druckmedium baut sich aufgrund der großen Drosselwirkung an der ersten Drosselstelle frühzeitig an der Stelleinheit ein großer Druck bzw. ein Stelldruck auf, so dass der Einstellkolben gegen die Druckfeder verschoben wird. Die Pumpeneinheit wird frühzeitig in Ihrem Fördervolumen begrenzt und ein überhöhter Druck bei niedrigen Drehzahlen der Brennkraftmaschine und dadurch bedingte Leistungsverluste vermieden. Bei warmer Brennkraftmaschine und bei warmen Druckmedium baut sich aufgrund der kleineren Drosselwirkung der ersten Drosselstelle relativ zur zweiten Drosselstelle erst bei höheren Drehzahlen der Brennkraftmaschine der Stelldruck auf, so dass angepasst an eine Viskositätsänderung des Druckmediums aufgrund der Temperaturänderung, erst bei höheren Drehzahlen das Fördervolumen der Pumpeneinheit reduziert wird. Mit der zweiten Drosselstelle können von der ersten Drosselstelle bedingte unerwünschte Druckschwankungen im Hauptölkanal sicher vermieden werden.

WO 2005/068838 A1 beschreibt ein Pumpensystem eines Verbrennungsmotors mit einer geregelten Pumpe, wobei ein Teilstrom des Förderungsmediums auf eine federvorgespannte Kolben-Zylindereinheit einwirkt, welche für einen weiteren Teilstrom des Fördermediums als Ventil wirkt.

JP 62 248812 A lehrt Ölkreislauf umfassend eine Ölpumpe, wobei das Fördermedium stromab der Ölpumpe in einem Hauptstrom zu einer Schmierstelle gefördert wird und in einem vom Hauptstrom abzweigenden, schaltbaren Bypass-Strom stromauf der Ölpumpe zuführbar ist, wobei die Schaltung des Bypass-Stroms durch ein elektromagnetische Spule schaltbar ist.

DE 4224973 A1 beschreibt ein Fluidversorgungssystem mit Druckbegrenzung wobei eine nach einer regelbaren Fluidpumpe abzweigende Regeldruckleitung sowie eine von einer Verbrauchsstelle abzweigende Rückmeldeleitung gemeinsam auf ein Mehrbereichsvorsteuerventil einwirken, welches druckbegrenzend auf die regelbare Fluidpumpe einwirken kann.

Allgemein ist eine geregelte Ölpumpe in dem Artikel "Kraftstoffeinsparpotenzial der geregelten Pendelschieberpumpe", Motortechnische Zeitung, MTZ 02, 2010, Seiten 104 bis 109 beschrieben.

Ein Nachteil des Standes der Technik ist sein komplizierter Aufbau und seine beschränkte Leistungsfähigkeit, beispielsweise kann das beschriebene System nur auf ein Öl (spezifisches Viskositäts-Temperatur-Verhalten) "geeicht" werden und kann bei einem Austausch des Öles nicht mehr zuverlässig arbeiten. Auch ist das Vorsehen zweier Drosseln wobei eine erste Drossel in seinem Widerstand verstellbar ausgebildet sein soll mit einem hohen Aufwand verbunden.

Der Erfindung liegt die Aufgabe zugrunde, eine Einstellvorrichtung mit den Merkmalen des Oberbegriffs des Anspruches 1 oder 13 derart weiterzubilden, dass bei der Regelung der Pumpe neben dem durch sein gefördertes Medium resultierenden Druck auch die Viskosität des Mediums in die Regelung mit einfließt. Insbesondere soll bei der Verwendung in einem Fahrzeug bei kaltem Medium die daraus resultierende hohe Viskosität in die Regelung der Pumpe mit einfließen und dies unter einem sowohl geringen apparativem Aufwand als auch in einer zuverlässigen Art und Weise. Ferner ist es Aufgabe der Erfindung, unabhängig von dem spezifischen Viskositäts-Temperatur-Verhaltens des Mediums und damit unabhängig von der Art des verwendeten Mediums eine "selbstregulierende" Eichung bzw. Beeinflussung der Pumpe vorteilhaft zu erreichen.

Diese Aufgabe wird durch die Merkmale des Anspruchs 1 bzw. 13 gelöst. Vorteilhafte Weiterbildungen der Erfindung ergeben sich aus den Unteransprüchen 2 bis 12 bzw. 14 und 15.

Als Kern der Erfindung wird es angesehen, dass auf den Stellzylinder eine Rückstellkraft aus einer Rückstellkrafteinheit wirkt, die der Zustellkraft zumindest teilweise entgegenwirkt, wobei die Rückstellkrafteinheit eine mit Medium durchströmte Druckleitung mit einer Drosselwirkung umfasst und die Rückstellkraft zumindest teilweise aus dem Druck der Druckleitung resultiert, wobei die Druckleitung vorzugsweise eine Abströmseite und eine Einströmseite der Pumpe verbindet. Die Rückstellkrafteinheit wird besonders bevorzugt, stetig während des Betriebs der Pumpe mit dem von der Pumpe geförderten Medium durchströmt. Damit wird eine schnelle und kontinuierliche Detektion und Berücksichtigung der Viskosität des Mediums bzw. deren Änderung bei der Pumpenregelung berücksichtigt.

Mit dem erfindungsgemäßen Aufbau wird die Pumpenregelung einerseits von dem Druck des Mediums der Steuerleitung und als mit diesem Druck konkurrierende, entgegenwirkende Stellgröße von der Rückstellkrafteinheit geregelt. Die Rückstellkraft der Rückstellkrafteinheit ergibt sich aus deren Drosselwirkung, die zu einem geringen Anteil aus dem Volumenstrom des Mediums und zu einem überwiegenden Anteil aus der Viskosität des Mediums resultiert.

Vorzugsweise wird die Fördermenge der Pumpe darüber hinaus durch eine weitere Stellgröße beeinflusst, wie beispielsweise in Abhängigkeit von der Drehzahl des Motors.

In einer vorteilhaften Ausführungsform weist die Rückstelleinheit einen Energiespeicher, vorzugsweise ein Feder- oder Elastomerelement auf, der bzw. das zusätzlich zu der Rückstellkraft resultierend aus dem Druck der Druckleitung, der Zustellkraft zumindest teilweise entgegenwirkt. Dadurch dass die Rückstellkraft und/oder die Zustellkraft mit einem Energiespeicher wie zum Beispiel einem Feder- und/oder Elastomerelement versehen ist, kann durch Auslegung und Justierung des wenigstens einen Feder- oder Elastomerelementes ein konstanter Kraftanteil in der Zustell- oder Rückstellkraft eingestellt werden. Damit können gewünschte Schwellwerte für die Summe der Zustellkraft und/oder der Rückstellkraft frei definiert und nach äußeren Konstruktionsbedingungen eingestellt werden. Auch können damit Fertigungsbedingte Unregelmäßigkeiten kompensiert werden.

Ferner hat es sich als vorteilhaft erwiesen, wenn die Rückstelleinheit einen von einer Halterung zwischen zwei Endlagen beweglich gelagerten Körper umfasst, wobei der Körper ein Drosselelement aufweist. Die bewegliche Lagerung kann vorzugsweise als lineare Lagerung des Körpers relativ zu der Halterung gestaltet sein. Alternativ oder zusätzlich kann der Körper auch rotatorische Bewegungsanteile gegenüber der Halterung ausführen. Die Strecke der Relativbewegung des Körpers zu der Halterung entspricht vorzugsweise einer Stellstrecke des Stellzylinders. Durch eine direkte Kopplung der Elemente und der entsprechenden Auslegung der Strecken kann ein sehr schnell ansprechendes System erreicht werden. Alternativ oder zusätzlich können Hebel und Lenker verwendet werden, um entsprechende Wege zu verkürzen und/oder durch entsprechend größere Wege die notwendige Kraft zu reduzieren (Hebelgesetz).

Ein zuverlässiger und fertigungstechnisch günstiger Aufbau kann dadurch erreicht werden, dass der Stellzylinder auf ein Ventilelement einwirkt und das Ventilelement die Verbindung eines Regelmediums in einer Regelleitung zu einem Stellglied der Pumpe zur Regelung der Förderleistung der Pumpe beeinflusst und die Rückstellkraft auf das Ventilelement einwirkt. Durch Zwischenschaltung eines Ventilelementes das durch die Rückstellkraft und die Zustellkraft geschaltet wird, können konstruktive Freiheiten und räumliche Anordnungen erreicht werden. Besonders bevorzugt erfolgt die Bewegung des Stellzylinders und/oder die Bewegung des beweglich gelagerten Körpers der Rückstelleinheit durch eine Beeinflussung bzw. Verstellung des Ventilelementes. So kann der beweglich gelagerte Körper als Teil einer Rückstelleinheit durch seine Bewegung und Abhängigkeit von der Viskosität des Mediums auf das Ventilelement einwirken. Beispielsweise dadurch dass der Körper mit einem Drosselelement versehen ist durch welches das Medium fließt. Durch seine Bewegung eine Stellkraft bzw. eine Rückstellkraft auf das Ventilelement ausführen, welches wiederum die Ansteuerung der Pumpe beeinflusst.

Der Aufbau lässt sich dahingehend weiter vereinfachen, wenn das Regelmedium gleich das Medium bildet, welches die Pumpe fördert. Dabei kann die Regelleitung aus der Arbeitsleitung vor dem Filter und/oder vor Verbrauchern oder aus der Druckleitung vor der Rückstelleinheit abgezweigt sein.

Alternativ oder zusätzlich kann die zuströmseitige Druckleitung der Rückstelleinheit als der Pumpe nächstgelegene Abzweigung auf der Druckseite der Pumpe angeordnet und/oder die abströmseitige Druckleitung der Rückstelleinheit als der Pumpe nächstgelegene Zuführung des Mediums zu der Saugseite der Pumpe angeordnet sein. Durch die örtlich und strömungstechnisch "nächstgelegene" Anordnung der Druckleitung der Rückstelleinheit kann eine nahezu unmittelbare Reaktion der Rückstelleinheit auf eine Veränderung der Fördermenge bzw. des Volumenstroms der Pumpe und/oder auf eine Änderung der Viskosität des Mediums im Bereich der Pumpe reagiert werden. Ferner erlaubt eine derartige Anordnung und Schaltung des Mediumstroms zu der Rückstelleinheit, dass die von der Rückstelleinheit der detektierten Druck bzw. Viskositätsveränderungen unverfälscht durch weitere in der Arbeitsleitung befindliche Elemente arbeiten kann. Darüber hinaus erlaubt die räumliche und schaltungstechnische Nähe der Rückstelleinheit zu der Pumpe auch eine Integrale Bauweise der Rückstelleinheit mit der Pumpe. Beispielsweise kann die Rückstelleinheit an ein Pumpengehäuse angeflanscht sein oder als einstückiger Bestandteil der Pumpe in dieser integriert sein.

Das Ventilelement ist vorzugsweise stufenlos verstellbar ausgebildet um eine möglichst definierte und fein abgestimmte Veränderung der Fördermenge der Pumpe einstellen zu können.

Die oben beschriebenen Energiespeicher, die einen vorzugsweise konstanten Kraftanteil zu der Zustellkraft und/oder der Rückstellkraft beiträgt, sind vorzugsweise stufenlos verstellbar ausgebildet. Diese stufenlose Verstellung kann entweder nach Art einer nur zeitweise vorzunehmenden Verstellmöglichkeit beispielsweise einer Stellschraube an bestimmte Betriebsparameter justiert werden, oder aber durch ein entsprechendes Stellglied, welches durch Inputgrößen (wie beispielsweise Motordrehzahl, Motortemperatur, Fahrerwunsch usw.) zur Optimierung des Betriebsablaufes herangezogen werden. Zusätzlich oder alternativ ist es von Vorteil, wenn die Einstellvorrichtung wenigstens zwei sich gegenseitig beeinflussende Energiespeicher umfasst, wobei ein Energiespeicher die Rückstellkraft und ein weiterer die Zustellkraft beeinflusst. Damit kann ein Aufschwingen der Regelung und des Speicherstellsystems bzw. der Ventileinheit unterbunden werden.

Konstruktiv kann die Drosselwirkung der Druckleitung durch einen schwammartig oder trichterartig ausgebildeten Bereich ausgebildet sein. So kann beispielsweise die Rückstelleinheit in dem in ihr verlaufenden Druckleitungsanteil einen schwamm- oder trichterartig ausgebildeten Bereich umfassen, der zur Detektion der Viskosität des diesen schwamm- oder trichterartig ausgebildeten Bereich durchfliesenden Mediums dienen kann.

Ein weitergehendes auf dem Erfindungsgedanken beruhendes Konzept sieht es vor, dass die Druckleitung durch ein Verschlusselement von der Arbeitsleitung trennbar ausgebildet ist, wobei das Ventilelement und/oder die Pumpenfördermenge während der Trennung der Druckleitung von der Arbeitsleitung im wesentlichen konstant gehalten wird. Mit einem derartigen System kann Energie eingespart werden, da beispielsweise nur kurzzeitig die Druckleitung mit dem Ventilelement mit Medium versorgt wird. Diese kurzzeitige Versorgung dient der Detektion der Viskosität und zur Einstellung der Fördermenge der Pumpe. In einem daran anschließenden Zeitraum wird die Pumpenfördermenge konstant und/oder basierend auf dem detektierten Wert von weiteren Betriebsinformationen abhängig geregelt. In einem dritten Zeitbereich der sich dem zweiten Zeitabschnitt anschließt, wird die Druckleitung wieder geöffnet und eine erneute Detektion der Viskosität des Mediums durch die Rückstelleinheit vorgenommen. Durch die nur sequenziell arbeitende Rückstelleinheit wird auch nur während dieser Detektionsphasen ein Widerstand bzw. eine Förderung des Mediums durch die Rückstelleinheit notwendig, so dass der Gesamtenergieverbrauch reduziert wird. Ferner ist es hierzu von Vorteil, wenn das Verschlusselement mit einem Fixierelement wirkverbunden ist und das Fixierelement die Verstellbarkeit des Ventilelementes hemmt, wobei vorzugsweise die Ansteuerung des Verschlusselementes und des Fixierelementes synchronisiert ausführbar ist. Mit einem derartigen System wird die in einem Zeitintervall detektierte Viskosität des Mediums zur Regelung der Pumpe herangezogen und diese Information "eingefroren". Zu einem späteren Zeitpunkt wenn wieder ein Detektionsintervall durchgeführt wird, wird die Pumpenfördermenge aufgrund der Viskosität erneut geregelt und danach wiederum "eingefroren".

Die erfindungsgemäße Einstellvorrichtung ist vorzugsweise in einer Pumpe zur Versorgung eines Kreislaufes einer Brennkraftmaschine verwendet. Hierbei kann es sich insbesondere um einen Ölkreislauf eines Dieselmotors handeln, wobei die Einstellvorrichtung derart ausgebildet ist, dass durch die Rückstellkraft eine zumindest von der Viskosität des Mediums abhängige Regelung der Fördermenge der Pumpe ermöglicht wird.

Ferner richtet sich die Erfindung auch an ein Verfahren zur Regelung einer Förderleistung einer Pumpe zur Versorgung eines Arbeitsortes einer Brennkraftmaschine.

Schließlich wirkt auf den Stellzylinder eine Rückstellkraft aus einer Rückstellkrafteinheit, die der Zustellkraft zumindest teilweise entgegenwirkt, wobei die Rückstellkrafteinheit eine vorzugsweise stetig mit Medium durchströmte Druckleitung mit einer Drosselwirkung umfasst und die Rückstellkraft zumindest teilweise aus den Druckverhältnissen bzw. des Drucks der Druckleitung resultiert, wobei die Druckleitung eine Abströmseite und eine Zuströmseite der Pumpe verbindet.

Mit einem derartigen Verfahren wird insbesondere bei zähflüssigem Medium eine hohe Rückstellkraft auf ein Ventilelement und bei Niederviskosemedium eine niedrige Rückstellkraft auf das Ventilelement erwirkt. Insbesondere bei einer hohen Motordrehzahl die auch eine verstärkte Förderleistung der Pumpe zur Folge haben kann, wird es ermöglicht, dass in diesem Fall bei Vorliegen eines flüssigen, niederviskosem Mediums die Rückstellkraft nicht auf ein Minimum aber auf einen niedrigen Bereich einstellt, so dass die Pumpe nicht gänzlich, sondern "etwas" zurückregelt.

In der nachfolgenden Tabelle sind unterschiedliche Kombinationen von Betriebszuständen des Motors bzw. dessen Motoröls und den Leistungsregelzuständen der Pumpe dargestellt. Hierbei sind die Drücke an der Drosselkomponente (P_{Drosselkomponente})und in der Steuer- und/oder Arbeitsleitung (P_{Steuer-/Arbeitstleitung}) aufgelistet. Als Stand der Technik wurde ein Aufbau gemäß einer geregelten Ölpumpe aus dem oben erwähnten Artikel "Kraftstoffeinsparpotential der geregelten Pendelschieberpumpe", MTZ 02, 2010, Seiten 104 bis 109 gewählt. Die Pumpenleistung L_{Pumpe} gemäß der Erfindung spiegelt die Berücksichtigung des erfindungsgemäßen Regelmechanismus wieder.

**Tabelle: Vergleich Stand der Technik mit erfindungsgemäßer Ausführung**

| n_{Motor} | η_{Öl} | p_{Drosselkomponente} | p_{Steuerieitung/Arbeitsleitung} | L_{Pumpe} Stand der Technik | L_{Pumpe} Erfindung |
|---|---|---|---|---|---|
| niedrig | niedrig | niedrig | niedrig | hoch/regelt nicht ab | hoch/regelt nicht ab |
| niedrig | hoch | hoch | hoch | niedrig/regelt ab | hoch/regelt nicht ab |
| hoch | niedrig | niedrig | hoch | niedrig/regelt ab | niedrig/regelt ab |
| hoch | hoch | hoch | hoch | niedrig/regelt ab | hoch/regelt nicht ab |

Auch ist es verfahrenstechnisch im Sinne der Erfindung von Vorteil, wenn phasenweise das Ventilelement fixierbar und die Druckleitung verschließbar ist, wobei vorzugsweise die Einleitung der Fixierung und des Verschlusses ausgehend von definierten Betriebszuständen der Brennkraftmaschine abhängig ist. In diesem Zusammenhang hat sich als vorteilhaft erwiesen, wenn der definierte Betriebszustand der Brennkraftmaschine eine detektierte Temperatur des Mediums, eine Temperatur des Motors und/oder des Kühlwassers, ein Zeitintervall, eine Betriebszustandshistorie, eine Rückmeldung aus dem Abgasnachbehandlungssystem und/oder einen Fahrerwunsch berücksichtigt.

Die Erfindung ist anhand von Ausführungsbeispielen in den Zeichnungsfiguren näher erläutert. Diese zeigen
- Fig.1:: ein schematisches Schaltbild einer erfindungsgemäßen, in einem Fahrzeug verbauten Einstellvorrichtung in Ventilstellung a;

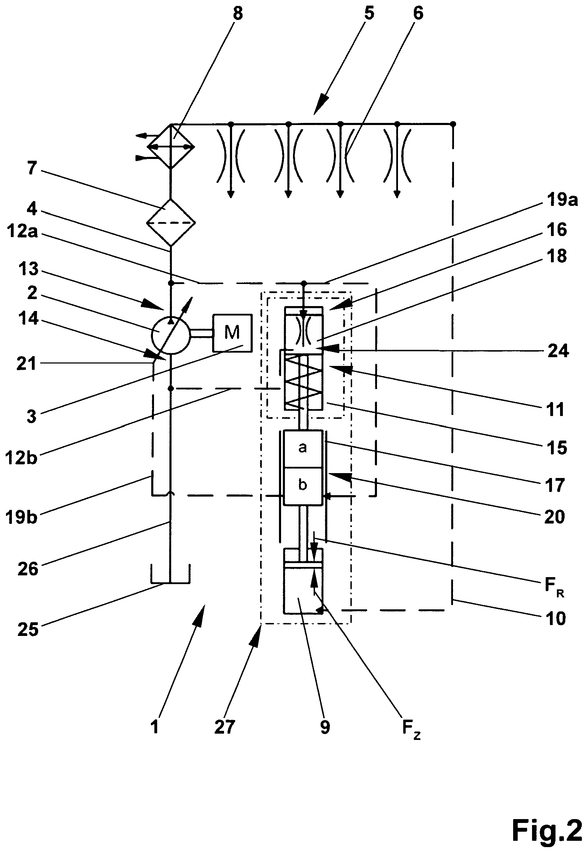

- Fig. 2:: ein schematisches Schaltbild des Mediumkreislaufs gemäß Figur 1 in Ventilstellung b;
- Fig. 3:: ein schematisches Blockschaltbild des erfindungsgemäßen Mediumkreislaufs;
- Fig. 4:: ein schematisches Blockschaltbild des Regelmechanismus gemäß Figur 3 im Detail.

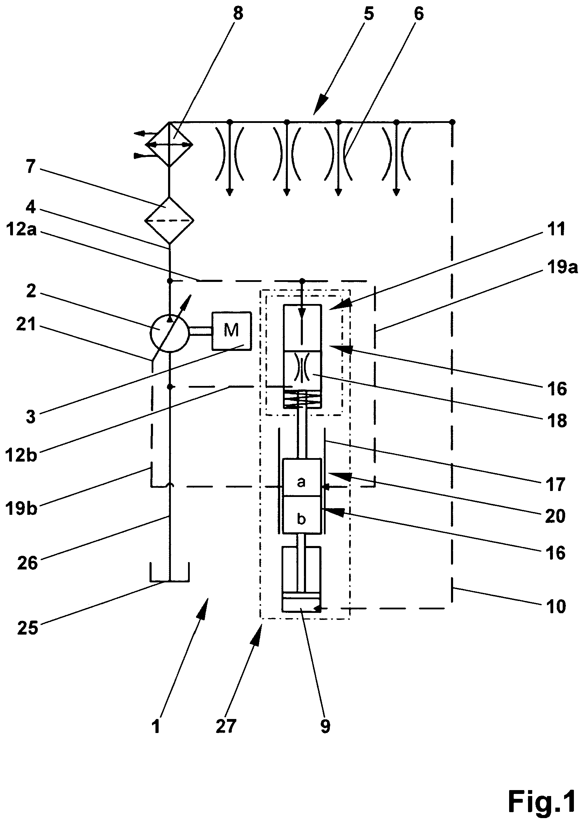

Das Schaltbild gemäß Figur 1 zeigt eine Einstellvorrichtung eines Kraftfahrzeuges mit einer Einstelleinheit 1 die zur Regelung der Förderleistung einer Pumpe 2 dient. Die Pumpe 2 wird von dem Motor 3 des Kraftfahrzeugs (nicht dargestellt) angetrieben. Der Motor 3 kann ein Verbrennungsmotor oder ein elektrischer Motor sein. Vorzugsweise dient der Motor 3 sowohl zum Antrieb der Pumpe 2 als auch zum Antrieb des Fahrzeugs selbst.

Das von der Pumpe 2 geförderte Medium gelangt über eine Arbeitsleitung 4 zu einem Arbeitsort 5. Der Arbeitsort 5 kann beispielsweise die Hauptölgalerie an die sich die Verbraucher 6 anschließen umfassen. In der Arbeitsleitung 4 können ferner ein Filter 7 für das Medium und/oder ein Wärmetauscher 8 angeordnet sein. Die Einstelleinheit 1 umfasst einen Stellzylinder 9, der über eine Steuerleitung 10 mit dem Arbeitsort 5 verbunden ist und den dort vorliegenden Arbeitsdruck des Mediums als auf den Stellzylinder 9 wirkende Zustellkraft F_{Z} bei der Zustellung des Stellzylinders 9 einwirkt. Erfindungsgemäß wirkt ferner auf den Stellzylinder 9 eine Rückstellkraft F_{R} aus einer Rückstellkrafteinheit 11, die der Zustellkraft F_{Z} entgegenwirkt, wobei die Rückstellkrafteinheit 11 eine mit Medium durchströmte Druckleitung 12 mit einer Drosselwirkung umfasst und die Rückstellkraft F_{R} zumindest teilweise aus dem Druck der Druckleitung 12 resultiert. Die Druckleitung 12 teilt sich in die der Einstelleinheit 1 Medium zuführende Druckleitung 12a und eine von der Einstelleinheit 1 Medium abführende Druckleitung 12b auf.

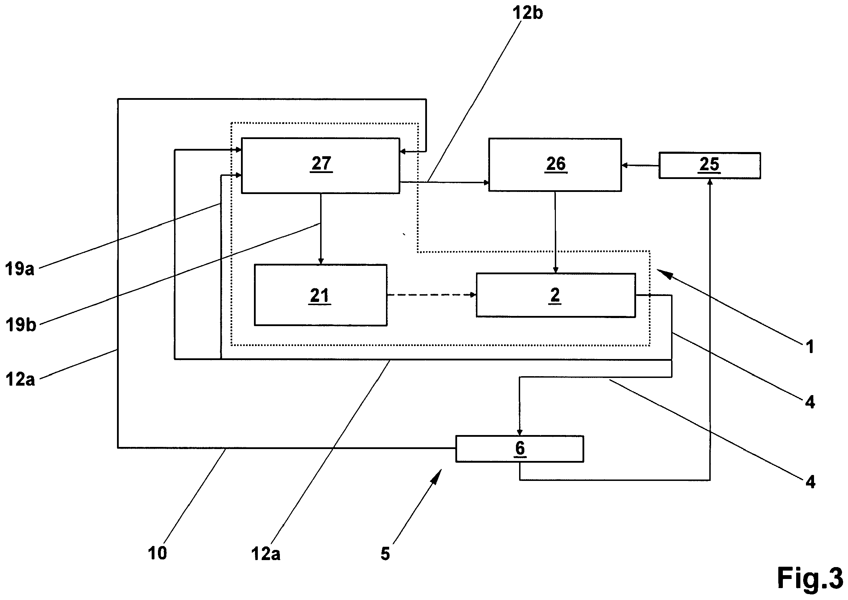

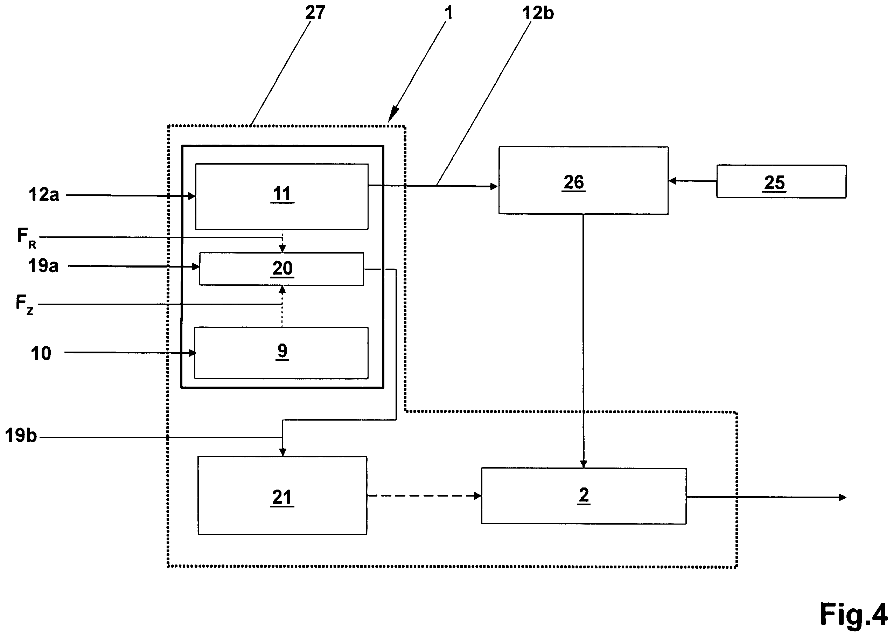

Ein Regelmechanismus 27 - Figuren 3 und 4 - umfasst die Rückstelleinheit 11, den Stellzylinder 9 und das Ventilelement 20. Als Input des Regelmechanismus 27 dient der Druck in der Druckleitung 12a, der Regelleitung 19a sowie der Druck der Steuerleitung 10. Diese Drücke wirken sich auf die Kräfte F_{Z} und F_{G} innerhalb des Regelmechanismus 27 aus und führen zu der über die Regelleitung 19b zu dem Stellglied 21 geleiteten Steuergröße zur Beeinflussung der Fördermenge der Pumpe 2. Über die Druckleitung 12b wird das zur Viskositätsbestimmung zirkulierende Medium der Saugleitung 26 und schließlich in den Förderkreislauf wieder zugeführt.

Vorzugsweise verbindet die Druckleitung eine Abströmseite 13 mit einer Zustromseite 14 der Pumpe 2.

In der dargestellten Ausführung handelt es sich bei der Pumpe 2 um eine Ölpumpe die innerhalb des Ölkreislaufes eines Verbrennungsmotors eines Kraftfahrzeuges das Motoröl aus einer Ölwanne 25 über eine Saugleitung 26 ansaugt und über eine Arbeitsleitung 4 an die Verbraucher 6 an dem Arbeitsort 5 zuführt. Statt einer Ölwanne 25 kann bei Verwendung eines andersartigen Mediums ein entsprechendes Reservoir verwendet werden.

Die Rückstelleinheit 11 weist einen als Feder ausgebildeten Energiespeicher 15 auf, der zusätzlich zu der Rückstellkraft F_{R}, der Zustellkraft F_{Z} entgegenwirkt. Beispielsweise ist das Federelement verstellbar ausgebildet, sodass der Energiespeicher 15 in seinem Betrag der zusätzlichen Rückstellkraft F_{R} verstellbar ist.

Auch umfasst die Rückstelleinheit 11 einen Körper 16 der innerhalb einer Halterung zumindest zwischen zwei Endlagen, vorzugsweise linear beweglich gelagert ist. In den Zeichnungsfiguren 1 und 2 sind die beiden Endlagen durch die Schaltstellungen a und b gekennzeichnet, die sich wechselweise in der Durchgangsstellung für das in der Regelleitung 19a, 19b befinden.

Der Körper 16 umfasst ferner ein Drosselelement 18 durch welches das in der Druckleitung 12 geführte Medium strömt.

In der dargestellten Ausführung entspricht die Strecke der Relativbewegung des Körpers 16 zwischen den zwei Endlagen innerhalb der Halterung der Stellstrecke des Stellzylinders 9.

Der Stellzylinder 9 kann z. B. direkt mechanisch auf die Pumpe 2 und damit auf das Fördervolumen der Pumpe einwirken (nicht dargestellt) oder alternativ über eine Regelleitung 19a, 19b und entsprechend dem Regelmedium auf die Pumpe 2 und damit auf die Förderleistung der Pumpe 2 einwirken. In der dargestellten Ausführungsform wirkt der Stellzylinder 9 auf ein Ventilelement 20 wobei das Ventilelement 20 die Verbindung eines Regelmediums in eine Regelleitung 19a, 19b zu einem Stellglied 21 der Pumpe 2 zur Regelung der Förderleistung der Pumpe 2 beeinflusst. Hierbei wirkt die Rückstellkraft F_{R} auf das Ventilelement 20 ein. Ferner ist es vorteilhaft, wenn durch die Bewegung des Stellzylinders 9 und/oder durch die Bewegung des beweglich gelagerten Körpers 16 der Rückstelleinheit 11 die Beeinflussung und/oder Verstellung des Ventilelementes 20 ausführbar ist. Beispielsweise erfolgt eine Bewegung des gesamten Körpers 16 der unter anderem das Drosselelement 18 umfasst, wobei die Bewegung des Körpers 16 samt Drosselelement 18 zu einer Verlagerung des Ventilelementes 20 führt und damit die Menge des Durchflusses an Regelmedium durch die Regelleitung 19a, 19b verändert und dieser Umstand schließlich das Stellglied 21 und damit die Förderleistung der Pumpe 2 verändert.

Die Regelleitung 19a zweigt aus der Arbeitsleitung 4 vor einem Filter 7 und vor den Verbrauchern 6 ab. Hierdurch wird eine schnelle Reaktionsfähigkeit des Systems in der Einstellvorrichtung begünstigt.

Die Druckleitung 12 weist eine zuströmseitige Druckleitung 12a und abströmseitige Druckleitung 12b relativ zu der Rückstelleinheit 11 auf, wobei die zuströmseitige Druckleitung 12a der Rückstelleinheit 11 als der Pumpe 2 nächstgelegene Abzweigung 22 auf der Druckseite der Pumpe 2 angeordnet ist und die abströmseitige Druckleitung 12b der Rückstelleinheit 11 als der Pumpe 2 nächstgelegene Zuführung 23 zu der Saugseite der Pumpe 2 angeordnet ist.

Das Ventilelement 20 ist hierbei stufenlos verstellbar ausgebildet, sodass neben den Schaltstellungen a (kein Durchfluss) und b (größtmöglicher Durchfluss) auch beliebige Zwischenstellungen ermöglicht werden. Der Durchfluss des Regelmediums durch die Regelleitung 19 erfolgt somit vorzugsweise zwischen den Extremwerten 0 und 1 in kontinuierlich verändernder Weise. Das Vemtilelelement 20 ist linear in der Lagerung 17 beweglich gelagert. Alternativ kann das Ventilelement 20 auch eine zumindest teilweise rotatorische Bewegung (nicht dargestellt) ausführen.

Auch der Energiespeicher 15 bzw. das Federelement, ist in seine Rückstell- und Zustellkraftwirkung F_{R}, F_{Z} stufenlos verstellbar ausgebildet, wobei die Einstellvorrichtung wenigstens zwei sich gegenseitig beeinflussende Energiespeicher 15 zur Unterbindung eines Aufschwingens aufweist (nicht dargestellt).

Die Drosselwirkung des in der Druckleitung 12a, 12b eingebundenen Drosselelementes 18 die zur Viskositätsdetektion dient und auf die Volumenstromregelung der Pumpe 2 einwirkt, kann vorzugsweise einen schwamm oder trichterartig ausgebildeten Bereich 24 aufweisen, der vorzugsweise innerhalb des Regelmechanismus 27 verlagert wird.

Aus den Zeichnungsfiguren 3 und 4 geht ferner ein Verfahren zur Regelung der Förderleistung einer Pumpe 2 zur Versorgung eines Arbeitsortes 5 eines mit einem Motor 3 versehenen Fahrzeugs, wobei der Motor 3 insbesondere eine Brennkraftmaschine, ein Elektromotor und/oder ein Dieselmotor ist. Das Verfahren verwendet eine Einstellvorrichtung mit zumindest einer Einstelleinheit 1 umfassend einen Stellzylinder 9 der über eine Steuerleitung 10 mit dem Arbeitsort 5 verbunden ist wobei der dort anliegende Arbeitsdruck des Mediums auf den Stellzylinder 9 wirkende Zustellkraft F_{Z} bei der Zustellung des Stellzylinders 9 einwirkt. Das Verfahren umfasst ferner eine Rückstelleinheit 11 deren Rückstellkraft F_{R}, die der Zustellkraft F_{Z} entgegenwirkt, ebenfalls auf den Stellzylinder 9 wirkt wobei die Rückstelleinheit 11 eine stetig mit Medium durchströmte Druckleitung 12a mit einer Drosselwirkung umfasst und die Rückstellkraft F_{R} aus dem Druck der Druckleitung 12a, 12b resultiert. Wobei vorzugsweise die Druckleitung 12a, 12b eine abstromseite und eine zustromseite der Pumpe 2 verbindet. Dadurch das ein Teilstrom des Mediums aus der Arbeitsleitung 4 durch den Fluss durch die Druckleitung 12a in ein Drosselelement 18 geleitet wird, kann abhängig von der Viskosität des Mediums eine entsprechende Rückstellkraft F_{R} auf die Zustellkraft F_{Z} des Stellzylinders 9 entgegenwirken. Damit wird durch die Bewegung des Stellzylinders 9 auf ein Stellglied 21 der Pumpe 2 eingewirkt, sodass der Volumenstrom der durch die Pumpe 2 gefördert wird, abhängig von der Viskosität des Mediums der Druckleitung regelbar ist.

Das Verfahren wird dadurch konkretisiert, dass bei zähflüssigem Medium eine hohe Rückstellkraft F_{R} auf ein Ventilelement 20 wirkt und bei niederviskosem Medium eine niedrigere Rückstellkraft F_{R} auf das Ventilelement 20 wirkt.

Zusätzlich oder alternativ kann das Verfahren dadurch verbessert werden, dass phasenweise das Ventilelement 20 fixierbar und/oder die Druckleitung 12, insbesondere die Druckzuführleitung 12a verschließbar ist, wobei vorzugsweise die Einleitung der Fixierung und/oder der Verschluss ausgehend von definierten Betriebszuständen der Brennkraftmaschine bzw. des Motors und/oder des Fahrzeugs abhängig ist. Selbstverständlich ist die erfindungsgemäße Einstelleinheit 1 sowie das der Erfindung zugrunde liegende Verfahren nicht auf eine Anwendung in einem Fahrzeug beschränkt, sondern erstreckt sich ebenso auf stationär betriebene Motoren 3 und/oder deren Motorkreisläufe eines Betriebsmediums.

**BEZUGSZEICHENLISTE**

| | | | |
|---|---|---|---|
| F_{Z} | Zustellkraft | 25 | Ölwanne |
| F_{R} | Rückstellkraft | 26 | Saugleitung |
| 1 | Einstelleinheit | 27 | Regelmechanismus |
| 2 | Pumpe | | |
| 3 | Motor | | |
| 4 | Arbeitsleitung | | |
| 5 | Arbeitsort | | |
| 6 | Verbraucher | | |
| 7 | Filter | | |
| 8 | Wärmetauscher | | |
| 9 | Stellzylinder | | |
| 10 | Steuerleitung | | |
| 11 | Rückstelleinheit | | |
| 12, 12a, 12b | Druckleitung | | |
| 13 | Abstromseite v. 2 | | |
| 14 | Zustromseite v. 2 | | |
| 15 | Energiespeicher | | |
| 16 | Körper v. 11 | | |
| 17 | Lagerung | | |
| 18 | Drosselelement | | |
| 19a, 19b | Regelleitung | | |
| 20 | Ventilelement | | |
| 21 | Stellglied v. 2 | | |
| 22 | Abzweigung v. 12a | | |
| 23 | Zuführung | | |
| 24 | Bereich | | |

## Patentansprüche

1. Einstellvorrichtung für einen Motor, mit zumindest einer Einstelleinheit (1) zur Regelung der Förderleistung einer Pumpe (2) die ein Medium über eine Arbeitsleitung (4) zu einem Arbeitsort (5) fördert, wobei die Einstelleinheit (1) einen Stellzylinder (9) umfasst, der über eine Steuerleitung (10) mit dem Arbeitsort (5) verbunden ist und der dort vorliegende Arbeitsdruck des Mediums als auf den Stellzylinder (9) wirkende Zustellkraft F_{Z} bei der Zustellung des Stellzylinders (9) einwirkt und auf den Stellzylinder (9) eine Rückstellkraft F_{R} aus einer Rückstelleinheit (11) einwirkt, die der Zustellkraft Fz entgegenwirkt, wobei die Rückstelleinheit (11) eine mit Medium durchströmte Druckleitung (12) mit einer Drosselwirkung umfasst und die Rückstellkraft F_{R} zumindest teilweise aus dem Druck der Druckleitung (12) resultiert und die Rückstelleinheit (11) einen von einer Halterung zwischen zwei Endlagen beweglich gelagerten Körper (16) umfasst, **dadurch gekennzeichnet, dass**
- sich die Druckleitung (12) in eine der Einstelleinheit (1) Medium zuführende Druckleitung (12a) und in eine von der Einstelleinheit (1) Medium abführende Druckleitung (12b) aufteilt und eine Abströmseite (13) und eine Zustromseite (14) der Pumpe (2) verbindet,
- der Stellzylinder (9) auf ein Ventilelement (20) einwirkt und das Ventilelement (20) die Verbindung eines Regelmediums in einer Regelleitung (19) zu einem Stellglied (21) der Pumpe (2) zur Regelung der Förderleistung der Pumpe (2) beeinflusst und die Rückstellkraft F_{R} auf das Ventilelement (20) einwirkt, wobei durch die Bewegung des Stellzylinders (9) und durch die Bewegung des beweglich gelagerten Körpers (16) der Rückstelleinheit (11) die Verstellung des Ventilelementes (20) erfolgt,
- der Körper (16) zumindest ein Drosselelement (18) umfasst, so dass bei zähflüssigem Medium eine hohe Rückstellkraft F_{R} auf das Ventilelement (20) wirkt und bei niederviskosem Medium eine niedrigere Rückstellkraft F_{R} auf das Ventilelement (20) wirkt, und
- das in der Druckleitung (12) geführte Medium durch das Drosselelement (18) strömbar ist.

2. Einstellvorrichtung nach Anspruch 1, **dadurch gekennzeichnet, dass** die Rückstelleinheit (11) einen Energiespeicher (15), vorzugsweise ein Feder- oder Elastomerelement umfasst, der/das zusätzlich zu der Rückstellkraft F_{R} resultierend aus dem Druck in der Druckleitung (12), der Zustellkraft F_{Z} zumindest teilweise entgegenwirkt.

3. Einstellvorrichtung nach Anspruch 1 oder 2, **dadurch gekennzeichnet, dass** eine Strecke der Relativbewegung des Körpers (16) zu der Halterung einer Stellstrecke des Stellzylinders (9) entspricht.

4. Einstellvorrichtung nach einem der vorhergehenden Ansprüche, **dadurch gekennzeichnet, dass** die Regelleitung (19) aus der Arbeitsleitung (5) vor einem Filter (7) und/oder vor Verbrauchern (6) oder aus der Druckleitung (12) vor der Rückstelleinheit (11) abzweigt.

5. Einstellvorrichtung nach einem der vorhergehenden Ansprüche, **dadurch gekennzeichnet, dass** die zuströmseitige Druckleitung (12a) der Rückstelleinheit (11) als der Pumpe (2) nächstgelegene Abzweigung (22) auf der Druckseite der Pumpe (2) angeordnet ist und/oder dass die abströmseitige Druckleitung (12b) der Rückstelleinheit (11) als der Pumpe (2) nächstgelegene Zuführung (23) zu der Saugseite der Pumpe (2) angeordnet ist.

6. Einstellvorrichtung nach einem der vorhergehenden Ansprüche, **dadurch gekennzeichnet, dass** das Ventilelement (20) stufenlos verstellbar ausgebildet ist.

7. Einstellvorrichtung nach einem der Ansprüche 2 bis 6, **dadurch gekennzeichnet, dass** der Energiespeicher (15) in seiner Rückstell- und/oder Zustellkraftwirkung F_{R}, F_{Z} stufenlos verstellbar ausgebildet ist und/oder das die Einstellvorrichtung wenigstens zwei sich gegenseitig beeinflussende Energiespeicher (15) zur Unterbindung eines Aufschwingens aufweist.

8. Einstellvorrichtung nach einem der vorhergehenden Ansprüche, **dadurch gekennzeichnet, dass** die Drosselwirkung der Druckleitung (12) durch einen schwamm- oder trichterartig ausgebildeten Bereich (24) erreicht wird.

9. Einstellvorrichtung nach einem der vorhergehenden Ansprüche, **dadurch gekennzeichnet, dass** die Druckleitung (12) durch ein Verschlusselement von der Arbeitsleitung (4) trennbar ist wobei das Ventilelement (20) und oder die Pumpenfördermenge während der Trennung der Druckleitung (12) von der Arbeitsleitung (20) im wesentlichen konstant gehalten wird, vorzugsweise wird die Pumpenfördermenge durch Fixierung des Ventilelementes (20) konstant gehalten.

10. Einstellvorrichtung nach Anspruch 9, **dadurch gekennzeichnet, dass** das Verschlusselement mit einem Fixierelement wirkverbunden ist und das Fixierelement die Verstellbarkeit des Ventilelementes (20) hemmt wobei vorzugsweise die Ansteuerung des Verschlusselementes und des Fixierelementes synchronisiert ausführbar ist.

11. Verwendung einer Einstellvorrichtung nach einem der vorhergehenden Ansprüche zur Regelung einer Pumpe (2) zur Versorgung eines Kreislaufes einer Brennkraftmaschine, vorzugsweise eines Ölkreislaufs eines Dieselmotors, wobei die Einstellvorrichtung derart ausgebildet ist, dass durch die Rückstellkraft F_{R} eine zumindest von der Viskosität des Mediums abhängige Regelung der Fördermenge der Pumpe (2) ermöglicht wird.

12. Verfahren zur Regelung einer Förderleistung einer Pumpe (2) zur Versorgung eines Arbeitsortes (5) eines Motors, wobei über eine Einstellvorrichtung mit zumindest einer Einstelleinheit (1) umfassend einen Stellzylinder (9), der über eine Steuerleitung (10) mit dem Arbeitsort (5) verbunden ist und den dort vorliegenden Arbeitsdruck des Mediums als auf den Stellzylinder (9) wirkende Zustellkraft F_{Z} bei der Zustellung des Stellzylinders (9) einwirkt, wobei auf den Stellzylinder (9) eine Rückstellkraft F_{R} aus einer Rückstelleinheit (11) einwirkt, die der Zustellkraft F_{Z} entgegenwirkt, wobei die Rückstelleinheit (11) eine zumindest phasenweise mit Medium durchströmte Druckleitung (12) mit einer Drosselwirkung umfasst und die Rückstellkraft F_{R} aus dem Druck der Druckleitung (12) resultiert und die Rückstelleinheit (11) einen von einer Halterung zwischen zwei Endlagen beweglich gelagerten Körper (16) umfasst, **dadurch gekennzeichnet, dass**
- sich die Druckleitung (12) in eine der Einstelleinheit (1) Medium zuführende Druckleitung (12a) und in eine von der Einstelleinheit (1) Medium abführende Druckleitung (12b) aufteilt und eine Abströmseite (13) und eine Zustromseite (14) der Pumpe (2) verbindet,
- der Stellzylinder (9) auf ein Ventilelement (20) einwirkt und das Ventilelement (20) die Verbindung eines Regelmediums in einer Regelleitung (19) zu einem Stellglied (21) der Pumpe (2) zur Regelung der Förderleistung der Pumpe (2) beeinflusst und die Rückstellkraft F_{R} auf das Ventilelement (20) einwirkt, wobei durch die Bewegung des Stellzylinders (9) und durch die Bewegung des beweglich gelagerten Körpers (16) der Rückstelleinheit (11) die Verstellung des Ventilelementes (20) erfolgt,
- der Körper (16) zumindest ein Drosselelement (18) umfasst, so dass bei zähflüssigem Medium eine hohe Rückstellkraft F_{R} auf ein Ventilelement (20) wirkt und bei niederviskosem Medium eine niedrigere Rückstellkraft F_{R} auf das Ventilelement (20) wirkt, und
- das in der Druckleitung (12) geführte Medium durch das Drosselelement (18) strömt.

13. Verfahren nach Anspruch 12, **dadurch gekennzeichnet, dass** phasenweise das Ventilelement (20) fixierbar und/oder die Druckleitung (12) verschließbar ist wobei vorzugsweise die Einleitung der Fixierung und/oder des Verschlusses ausgehend von definierten Betriebszuständen der Brennkraftmaschine abhängig ist, vorzugsweise berücksichtigt der definierte Betriebszustand des Motors (3) eine detektierte Temperatur des Mediums, eine Temperatur des Motors und/oder des Kühlwassers, ein Zeitintervall, eine Betriebszustandshistorie, eine Rückmeldungen aus dem Abgasnachbehandlungssystem und/oder einen Fahrerwunsch.

## Claims

1. Adjusting device for an engine, having at least one adjusting unit (1) for regulating the capacity of a pump (2), which delivers a medium via a working line (4) to a working location (5), the adjusting unit (1) comprising an actuating cylinder (9), which is connected to the working location (5) by a control line (10), and the working pressure of the medium prevailing there acting as an advance force F_{Z} on the actuating cylinder (9) during the advance of the actuating cylinder (9), and a return force F_{R} from a return unit (11) acting on the actuating cylinder (9), counteracting the advance force F_{Z}, the return unit (11) comprising a pressure line (12), through which medium flows and which has a restricting effect, and the return force F_{R} resulting at least in part from the pressure in the pressure line (12) and the return unit (11) comprising a body (16), which is supported by a holder in a manner which allows movement between two end positions, **characterized in that**
- the pressure line (12) is divided into a pressure line (12a) feeding medium to the adjusting unit (1) and into a pressure line (12b) carrying medium away from the adjusting unit (1) and connects an outflow side (13) and an inflow side (14) of the pump (2),
- the actuating cylinder (9) acts on a valve element (20), and the valve element (20) influences the connection of a regulating medium in a regulating line (19) to a control element (21) of the pump (2) for regulating the capacity of the pump (2), and the return force F_{R} acts on the valve element (20), the adjustment of the valve element (20) being effected by the movement of the actuating cylinder (9) and by the movement of the movably supported body (16) of the return unit (11),
- the body (16) comprises at least one restictor element (18), so that a high return force F_{R} acts on the valve element (20) in the case of a viscous medium, and a lower return force F_{R} acts on the valve element (20) in the case of a low-viscosity medium, and
- the medium carried in the pressure line (12) can flow through the restrictor element (18).

2. Adjusting device according to Claim 1, **characterized in that** the return unit (11) comprises an energy storage device (15), preferably a spring or elastomer element, which at least partially counteracts the advance force F_{Z} in addition to the return force F_{R} resulting from the pressure in the pressure line (12).

3. Adjusting device according to Claim 1 or 2, **characterized in that** a distance of the movement of the body (16) relative to the holder corresponds to an actuating distance of the actuating cylinder (9).

4. Adjusting device according to one of the preceding claims, **characterized in that** the regulating line (19) branches off from the working line (5) ahead of a filter (7) and/or ahead of loads (6) or from the pressure line (12) ahead of the return unit (11).

5. Adjusting device according to one of the preceding claims, **characterized in that** the inflow-side pressure line (12a) of the return unit (11) is arranged on the discharge side of the pump (2) as the branch (22) closest to the pump (2), and/or **in that** the outflow-side pressure line (12b) of the return unit (11) is arranged as the feed (23) to the suction side of the pump (2) which is closest to the pump (2).

6. Adjusting device according to one of the preceding claims, **characterized in that** the valve element (20) is of infinitely variable design.

7. Adjusting device according to one of Claims 2 to 6, **characterized in that** the energy storage device (15) is of infinitely variable design in terms of the effect of its return and/or advance force F_{R}, F_{Z}, and/or **in that** the adjusting device has at least two energy storage devices (15), which influence each other, for preventing excitation.

8. Adjusting device according to one of the preceding claims, **characterized in that** the restricting effect of the pressure line (12) is achieved by means of a region (24) of sponge- or funnel-type design.

9. Adjusting device according to one of the preceding claims, **characterized in that** the pressure line (12) can be separated from the working line (4) by means of a closure element, the valve element (20) and/or the pump delivery rate being held substantially constant during the separation of the pressure line (12) from the working line (20), the pump delivery rate preferably being held constant by fixing the valve element (20).

10. Adjusting device according to Claim 9, **characterized in that** the closure element is operatively connected to a fixing element, and the fixing element inhibits the adjustability of the valve element (20), and the activation of the closure element and of the fixing element can preferably be carried out in a synchronised manner.

11. Use of an adjusting device according to one of the preceding claims for regulating a pump (2) for supplying a circuit of an internal combustion engine, preferably an oil circuit of a diesel engine, the adjusting device being designed in such a way that regulation of the delivery rate of the pump (2) dependent at least on the viscosity of the medium is made possible by the return force F_{R}.

12. Method for regulating a capacity of a pump (2) for supplying a working location (5) of an engine, wherein by means of an adjusting device having at least one adjusting unit (1) comprising an actuating cylinder (9), which is connected to the working location (5) by a control line (10), and the working pressure of the medium prevailing there acts as an advance force F_{Z} acting on the actuating cylinder (9) during the advance of the actuating cylinder (9), a return force F_{R} from a return unit (11) acting on the actuating cylinder (9), counteracting the advance force F_{Z}, the return unit (11) comprising a pressure line (12), through which medium flows at least in phases and which has a restricting effect, and the return force F_{R} resulting from the pressure in the pressure line (12) and the return unit (11) comprising a body (16), which is supported by a holder in a manner which allows movement between two end positions, **characterized in that**
- the pressure line (12) is divided into a pressure line (12a) feeding the medium to the adjusting unit (1) and into a pressure line (12b) carrying medium away from the adjusting unit (1) and connects an outflow side (13) and an inflow side (14) of the pump (2),
- the actuating cylinder (9) acts on a valve element (20), and the valve element (20) influences the connection of a regulating medium in a regulating line (19) to a control element (21) of the pump (2) for regulating the capacity of the pump (2), and the return force F_{R} acts on the valve element (20), the adjustment of the valve element (20) being effected by the movement of the actuating cylinder (9) and by the movement of the movably supported body (16) of the return unit (11),
- the body (16) comprises at least one restrictor element (18), so that a high return force F_{R} acts on a valve element (20) in the case of a viscous medium, and a lower return force F_{R} acts on the valve element (20) in the case of a low-viscocity medium, and
- the medium carried in the pressure line (12) flows through the restrictor element (18).

13. Method according to Claim 12, **characterized in that** the valve element (20) can be fixed and/or the pressure line (12) can be closed in phases, the initiation of fixing and/or of closure preferably being dependent on defined operating states of the internal combustion engine, the defined operating state of the engine (3) preferably taking into account a detected temperature of the medium, a temperature of the engine and/or of the coolant, a time interval, an operating state history, feedback from the exhaust gas aftertreatment system and/or a driver requirement.

## Revendications

1. Dispositif de réglage pour un moteur, avec tout au moins une unité de réglage (1) en vue de la régulation de la capacité de pompage d'une pompe (2) qui transporte un milieu jusqu'à un lieu de travail (5) par l'intermédiaire d'une conduite de travail (4) ; selon lequel l'unité de réglage (1) comprend un vérin de réglage (9) qui est relié avec le lieu de travail (5) par l'intermédiaire d'une conduite de commande (10) et la pression de travail du milieu qui existe dans cette dernière agit sous la forme d'une force d'avance (F_{Z}), laquelle agit sur le vérin de réglage (9) lors de l'avance du vérin de réglage (9), et une force de rappel (F_{R}) agit sur le vérin de réglage (9) à partir d'une unité de rappel (11), laquelle force de rappel (F_{R}) agit à l'encontre de la force d'avance (F_{Z}) ;
selon lequel l'unité de rappel (11) comprend une conduite sous pression (12) avec un effet d'étranglement, laquelle est traversée par un milieu, et la force de rappel (F_{R}) résulte, tout au moins en partie, de la pression de la conduite sous pression (12) et l'unité de rappel (11) comprend un corps (16) positionné de manière mobile par un support situé entre deux positions de fin de course ;
**caractérisé en ce que**
- la conduite sous pression (12) se divise en une conduite sous pression (12a) qui amène un milieu vers l'unité de réglage (1) et en une conduite sous pression (12b) qui évacue le milieu de l'unité de réglage (1) et ladite conduite sous pression (12) relie une sortie de flux (13) et une entrée de flux (14) de la pompe (2) ;
- le vérin de réglage (9) agit sur un élément de soupape (20) et l'élément de soupape (20) influe sur le raccordement d'un milieu de réglage dans une conduite de réglage (19) vers un actionneur (21) de la pompe (2), en vue de la régulation de la capacité de pompage de la pompe (2) et la force de rappel (F_{R}) agit sur l'élément de soupape (20) ;
selon lequel le réglage de l'élément de soupape (20) est réalisé par le mouvement du vérin de réglage (9), ainsi que par le mouvement du corps (16) de l'unité de rappel (11), qui est positionné de manière mobile ;
- le corps (16) comprend tout au moins un élément d'étranglement (18), de telle sorte qu'une force de rappel (F_{R}) élevée agit sur l'élément de soupape (20), lorsque le milieu est visqueux, et de telle sorte qu'une faible force de rappel (F_{R}) agit sur l'élément de soupape (20) dans le cas d'un milieu à faible viscosité ; et
- le milieu guidé dans la conduite sous pression (12) peut circuler à travers l'élément d'étranglement (18).

2. Dispositif de réglage selon la revendication 1, **caractérisé en ce que** l'unité de rappel (11) comprend un accumulateur d'énergie (15), de préférence un élément en élastomère ou un élément formant ressort, qui agit, tout au moins en partie, à l'encontre de la force d'avance (F_{Z}), en sus de la force de rappel (F_{R}), en résultat de la pression dans la conduite sous pression (12).

3. Dispositif de réglage selon la revendication 1 ou 2, **caractérisé en ce qu'**un tronçon du mouvement relatif du corps (16) vers le support correspond à un tronçon de réglage du vérin de réglage (9).

4. Dispositif de réglage selon l'une des revendications précédentes, **caractérisé en ce que** la conduite de réglage (19) forme un embranchement à partir de la conduite de travail (5) en amont d'un filtre (7) et/ou en amont de consommateurs (6), ou à partir de la conduite sous pression (12) en amont de l'unité de rappel (11).

5. Dispositif de réglage selon l'une des revendications précédentes, **caractérisé en ce que** la conduite sous pression (12a), située du côté du flux d'alimentation, de l'unité de rappel (11) est disposée sur le côté de pression de la pompe (2), sous la forme de la bifurcation (22) la plus proche de la pompe (2) et/ou **caractérisé en ce que** la conduite sous pression (12b), située du côté du flux d'échappement, de l'unité de rappel (11) est disposée vers le côté aspiration de la pompe (2), sous la forme de l'alimentation (23) la plus proche de la pompe (2).

6. Dispositif de réglage selon l'une des revendications précédentes, **caractérisé en ce que** l'élément de soupape (20) est conçu de manière à pouvoir être réglable en continu.

7. Dispositif de réglage selon l'une des revendications 2 à 6, **caractérisé en ce que** l'accumulateur d'énergie (15) est conçu de manière à pouvoir être réglable en continu dans son effet de force de rappel (F_{R}) et/ou dans son effet de force d'avance (F_{Z}) et/ou **caractérisé en ce que** le dispositif de réglage présente au moins deux accumulateurs d'énergie (15) qui s'influencent mutuellement, en vue de la prévention des vibrations.

8. Dispositif de réglage selon l'une des revendications précédentes, **caractérisé en ce que** l'effet d'étranglement de la conduite sous pression (12) est obtenu par l'intermédiaire d'une zone (24) conçue de manière spongieuse ou ayant la forme d'un entonnoir.

9. Dispositif de réglage selon l'une des revendications précédentes, **caractérisé en ce que** la conduite sous pression (12) peut être séparée de la conduite de travail (4) par l'intermédiaire d'un élément de verrouillage ;
selon lequel l'élément de soupape (20) et/ou le débit de la pompe est ou sont, pour l'essentiel, maintenus à un niveau constant lors de la séparation de la conduite sous pression (12) avec la conduite de travail (20), de préférence le débit de la pompe est maintenu à un niveau constant par la fixation de l'élément de soupape (20).

10. Dispositif de réglage selon la revendication 9, **caractérisé en ce que** l'élément de verrouillage est en liaison active avec un élément de fixation et l'élément de fixation bloque la possibilité de réglage de l'élément de soupape (20), selon lequel le pilotage de l'élément de verrouillage et de l'élément de fixation peut, de préférence, être réalisé de manière synchronisée.

11. Utilisation d'un dispositif de réglage selon l'une des revendications précédentes en vue de la régulation d'une pompe (2) destinée à l'alimentation d'un circuit d'un moteur à combustion interne, de préférence d'un circuit d'huile d'un moteur diesel, selon laquelle le dispositif de réglage est conçu de telle sorte qu'une régulation du débit de la pompe (2), laquelle régulation dépend tout au moins de la viscosité du milieu, est rendue possible par l'intermédiaire de la force de rappel (F_{R}).

12. Procédé destiné à la régulation d'une capacité de pompage d'une pompe (2) en vue de l'alimentation d'un lieu de travail (5) d'un moteur ;
selon lequel un dispositif de réglage comprend tout au moins une unité de réglage (1) avec un vérin de réglage (9), lequel est relié avec le lieu de travail (5) par l'intermédiaire d'une conduite de commande (10) et la pression de travail du milieu qui existe dans cette dernière agit sous la forme d'une force d'avance (F_{Z}), laquelle agit sur le vérin de réglage (9), lors de l'avance du vérin de réglage (9) ;
selon lequel une force de rappel (F_{R}) agit sur le vérin de réglage (9) à partir de l'unité de rappel (11), laquelle force de rappel (F_{R}) agit à l'encontre de la force d'avance (F_{Z}) ;
selon lequel l'unité de rappel (11) comprend une conduite sous pression (12) avec un effet d'étranglement, laquelle est traversée par un milieu, tout au moins par phases, et la force de rappel (F_{R}) résulte de la pression de la conduite sous pression (12) et l'unité de rappel (11) comprend un corps (16) positionné de manière mobile par un support situé entre deux positions de fin de course ;
**caractérisé en ce que**
- la conduite sous pression (12) se divise en une conduite sous pression (12a) qui amène un milieu vers l'unité de réglage (1) et en une conduite sous pression (12b) qui évacue le milieu de l'unité de réglage (1) et ladite conduite sous pression (12) relie une sortie de flux (13) et une entrée de flux (14) de la pompe (2) ;
- le vérin de réglage (9) agit sur un élément de soupape (20) et l'élément de soupape (20) influe sur le raccordement d'un milieu de réglage dans une conduite de réglage (19) vers un actionneur (21) de la pompe (2), en vue de la régulation de la capacité de pompage de la pompe (2) et la force de rappel (F_{R}) agit sur l'élément de soupape (20) ;
selon lequel le réglage de l'élément de soupape (20) est réalisé par le mouvement du vérin de réglage (9), ainsi que par le mouvement du corps (16) de l'unité de rappel (11), qui est positionné de manière mobile ;
- le corps (16) comprend tout au moins un élément d'étranglement (18), de telle sorte qu'une force de rappel (F_{R}) élevée agit sur l'élément de soupape (20), lorsque le milieu est visqueux, et de telle sorte qu'une faible force de rappel (F_{R}) agit sur l'élément de soupape (20) dans le cas d'un milieu à faible viscosité ; et
- le milieu guidé dans la conduite sous pression (12) circule à travers l'élément d'étranglement (18).

13. Procédé selon la revendication 12, **caractérisé en ce que** l'élément de soupape (20) peut être fixé par phases et/ou la conduite sous pression (12) peut être fermée par phases ;
selon lequel l'introduction de la fixation et/ou de la fermeture dépend ou dépendent de préférence des états de fonctionnement définis du moteur à combustion interne ;
selon lequel l'état de fonctionnement défini du moteur (3) prend en compte, de préférence, une température détectée du milieu, une température du moteur et/ou une température de l'eau de refroidissement, un intervalle de temps, un historique des états de fonctionnement, une réponse du système de traitement en aval des gaz d'échappement et/ou un souhait du conducteur.
